# FASCICULE DE BREVET EUROPEEN

(11) **EP 1 474 990 B1**
(45) Date de publication et mention de la délivrance du brevet: **22.03.2006**
(21) Numéro de dépôt: 04291169.3
(22) Date de dépôt: 06.05.2004
(51) Int. Cl.: A23B 4/09, A23B 4/06, A23L 3/375

(54) **Procede de destructuration d'un bloc de produits de la mer congeles, en particulier de crustaces genre crevettes ou langoustines**
Verfahren zum Abbauen der Struktur eines tiefgefrorenen Blockes aus Meeresprodukten, insbesondere Krustentiere wie Garnelen oder Langustinen
Process for the destructuration of a block of frozen seafood, especially crustaceans such as shrimps and prawns

(30) Priorité: 06.05.2003 FR 0305508
(43) Date de publication de la demande: 10.11.2004
(73) Titulaire: France Agro Industries, 44340 Bouguenais (FR)
(72) Inventeur: Besnardeau, Guy, Antananarivo 101 (MG)
(74) Mandataire: Michelet, Alain

(56) Documents cités:
- AU-A- 4 141 778
- FR-A- 2 756 146
- US-A- 4 714 618
- US-A- 6 004 607
- DATABASE WPI Derwent Publications Ltd., London, GB; AN 1992-174137 XP002268213 EGORSHIN VV: "Frozen fish blocks thawing and brine salting equipment - comprises brine tank with blocks container hinged at one end so that blocks can be loaded and lowered into circulating brine" & SU 1 658 965 A (YUZHRYBTEKHTSENTR FISHING ASSOC) 30 juin 1991 (1991-06-30)
- DATABASE FSTA [Online] INTERNATIONAL FOOD INFORMATION SERVICE (IFIS), FRANFURT/MAIN, DE; 1978, ASADA T: "Experimental freezing of shrimp in a fabricated brine composed of salt and sugar" XP002268212 Database accession no. 78-1-12-r0654

## Description

La présente invention concerne un procédé de déstructuration d'un bloc congelé de produits de la mer, en particulier de crustacés genre crevettes ou langoustines, et même de poissons ou similaires.

La conservation par congélation de produits de la mer, et notamment de crevettes fraîches, permet de différer leur consommation. Pour faciliter leur stockage et leur transport, ces produits congelés se présentent bien souvent sous forme de blocs parallélépipédiques.
Ensuite, en vue de leur commercialisation, ces produits congelés doivent être individualisés pour être disposés dans des emballages adaptés pour leur présentation à la vente.

Ces opérations d'individualisation, ou autrement dit de déstructuration du bloc congelé, s'effectuent de manière classique par action mécanique, en général par un ou plusieurs chocs destinés à désagréger le bloc de produits congelés.

Cependant, ce mode opératoire n'est pas sans conséquence sur l'intégrité des produits. En effet, les actions mécaniques correspondantes provoquent des cassures ou des détériorations des produits de la mer constituant les blocs congelés, et les produits abîmés deviennent alors bien souvent impropres à la vente.

Des procédes de traitement de produits de la mer congelés sont par example décrits dans FR 2 756 146 et AU 41417/78.

La présente invention propose un procédé qui permet de supprimer les pertes par détérioration habituellement provoquées par les déstructurations mécaniques des blocs de produits de la mer congelés.

Le procédé conforme à l'invention consiste :
- à soumettre le bloc de produits congelés à un premier liquide de traitement adapté pour individualiser lesdits produits tout en les maintenant dans un état congelé, puis
- à soumettre lesdits produits congelés individualisés à un second liquide de traitement adapté pour abaisser leur température afin d'optimiser leur conservation.

Selon une forme préférée de réalisation, le procédé consiste :
- à traiter le bloc de produits congelés avec un premier liquide de traitement en forme de saumure à température T1 négative, ceci pendant un temps t1 adapté pour individualiser lesdits produits, puis
- à traiter lesdits produits individualisés avec un second liquide de traitement en forme de saumure à une température T2 négative, inférieure à T1, et ceci pendant un temps t2 adapté pour que lesdits produits individualisés atteignent leur température optimale de conservation.

Selon cette forme particulière de réalisation, en particulier pour le traitement de crevettes ou similaires, le procédé de traitement consiste avantageusement :
- à traiter le bloc de produits congelés avec une première saumure à une température T1 comprise entre - 2°C et - 6°C, pendant un temps t1 compris entre 2 et 5 min, puis
- à traiter les produits individualisés obtenus, avec une seconde saumure à une température T2 comprise entre - 18°C et - 22°C, ceci pendant un temps t2 compris entre 2 et 4 min.
Pour des produits plus gros (par exemple de type poissons), les durées de traitement seront plus importantes.

Le traitement du bloc de produits congelés, et/ou le traitement des produits individualisés, sont avantageusement réalisés - soit par arrosage d'un liquide de traitement, - soit par aspersion d'un liquide de traitement, - soit par immersion dans au moins un bain de liquide de traitement approprié, associé de préférence à un bullage.

Toujours selon l'invention, le procédé de traitement consiste en outre, après les opérations de déstructuration du bloc congelé et de mise à température de conservation optimale des produits individualisés :
- à peser individuellement chaque produit,
- à regrouper lesdits produits en lots notamment en fonction de leur poids, et
- à conditionner lesdits lots de produits dans des emballages appropriés en vue de leur stockage, leur transport et/ou leur présentation à la vente.

Le procédé selon l'invention pent être mis en oeuvre au moyen de l'installation suivante qui comprend :
- un poste de chargement des blocs de produits congelés ;
- un poste de traitement comportant un premier liquide de traitement approprié pour individualiser lesdits produits tout en les maintenant dans un état congelé, le traitement desdits produits par ledit liquide étant réalisé par des moyens d'application adaptés ;
- un poste de traitement comportant un autre liquide de traitement approprié pour amener lesdits produits congelés individualisés à une température optimale en vue de leur conservation par le froid, le traitement desdits produits par ledit liquide étant réalisé par des moyens d'application adaptés ; et
- des moyens de transfert automatique des produits d'un poste à l'autre.

Selon une forme particulière de réalisation, l'installation de traitement précitée comprend en outre :
- un poste de pesée individuelle de chaque produit ;
- un poste de triage des produits en lots, notamment en fonction de leur poids ;
- un poste de conditionnement de ces lots dans des emballages appropriés en vue de leur stockage, de leur transport et/ou de leur présentation à la vente ; et
- des moyens de convoyage automatique des produits d'un poste à l'autre.

Selon des formes particulières de réalisation conformes à l'invention, l'un au moins des postes de traitement de l'installation décrite ci-dessus comporte :
- au moins une cuvette d'arrosage comprenant un élément de fond plan muni d'une pluralité de perforations, laquelle cuvette d'arrosage est associée à un moyen d'apport en liquide de traitement, ou
- au moins une buse d'aspersion du liquide de traitement, ou
- au moins un bac d'immersion des produits, chargés en liquide de traitement, lequel bac est équipé d'un dispositif de bullage.

Mais l'invention sera encore illustrée par la description suivante d'un procédé de déstructuration de blocs congelés, conforme à l'invention, et d'une installation pour sa mise en oeuvre, donnés uniquement à titre indicatif, et illustrés par les dessins annexés suivants dans lesquels :
- la figure 1 est une représentation schématique des principales étapes du procédé de traitement de blocs congelés de produits de la mer ;
- la figure 2 est encore une représentation schématique d'étapes complémentaires, éventuellement envisagées à la suite du procédé représenté sur la figure 1 ;
- I a figure 3 est une représentation schématique d'une installation de traitement conforme à l'invention, adaptée pour la mise en oeuvre du procédé de la figure 1.

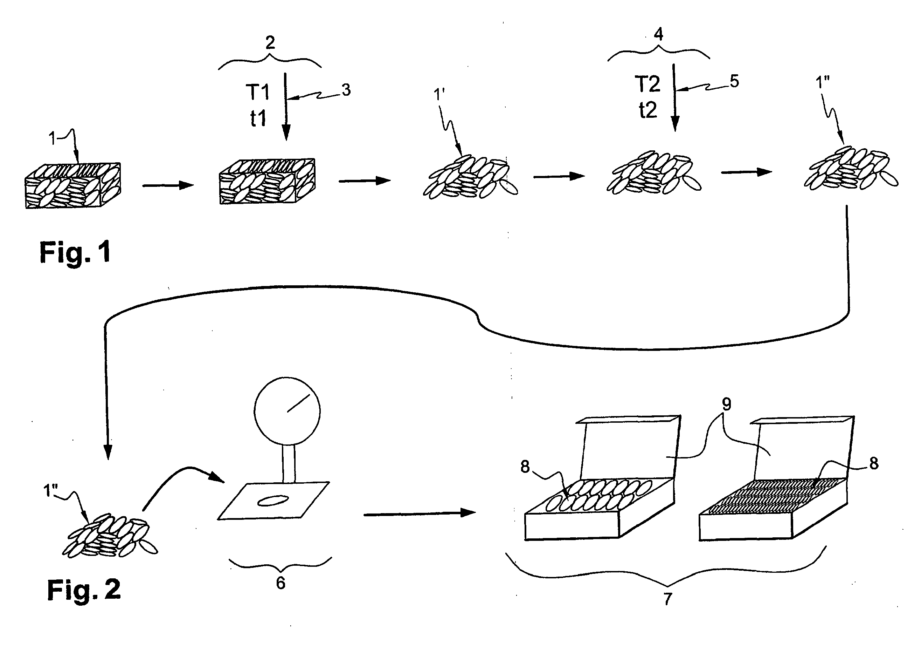

Le procédé conforme à l'invention, représenté schématiquement sur la figure 1, vise principalement à individualiser des produits de la mer initialement sous forme de blocs congelés (encore appelés « pains »), sans entraîner à aucun moment une décongélation desdits produits.

En l'espèce, les produits de la mer, ici de type crevettes congelées, se présentent initialement sous la forme de blocs congelés parallélépipédiques 1, comprenant essentiellement des crevettes et une certaine quantité de glace selon le procédé de congélation.

Une première étape 2 du procédé correspondant consiste à soumettre le bloc de produits congelés 1 à un premier liquide de traitement 3 approprié, de manière à obtenir des crevettes individualisées congelées 1' par déstructuration du bloc congelé 1, tout en maintenant lesdites crevettes dans un état congelé.
Ce premier liquide de traitement 3 consiste avantageusement en une saumure à température T1 négative comprise entre - 2°C et - 6°C ; le temps de traitement t1 adapté pour individualiser les produits est de préférence compris entre 2 et 5 minutes.

Les produits de la mer 1' individualisés, et toujours dans un état congelé, sont ensuite soumis à une deuxième étape de traitement 4 visant à abaisser leur température pour optimiser leur conservation par le froid, et ceci notamment en fonction des réglementations en vigueur.
Pour cela, les produits congelés individualisés 1' sont traités avec un second liquide de traitement 5, par exemple en forme de saumure à une température T2 négative, inférieure à T1, comprise avantageusement entre - 18°C et - 22°C, et ceci pendant un temps t2 adapté, de préférence compris entre 2 et 4 minutes.

Les liquides de traitement mis en oeuvre dans les étapes 2 et 4 du procédé sont de préférence des saumures de chlorure de sodium, complétées éventuellement par tout additif approprié, par exemple un antioxydant (métabisulfite ...), une substance d'enrobage (sorbitol ...) ou encore un produit anti-bactérien (GDL ...). Le ou les additifs précités peuvent également être appliqués sur les produits lors d'une étape distincte, destinée à être intercalée entre lesdites étapes de traitement 2 et 4.

Le procédé de traitement de blocs de produits de la mer conforme à l'invention, permet ainsi l'obtention de produits de la mer congelés et individualisés 1", dont la température intrinsèque assure une conservation optimale. Ces produits de la mer 1" peuvent être facilement conditionnés dans des emballages appropriés en vue de leur présentation à la vente, mais aussi en vue de leur stockage et/ou de leur transport.
Le procédé de traitement correspondant permet de limiter efficacement les détériorations des produits ; de plus, il offre la possibilité d'individualiser les produits de la mer congelés sans rompre la chaîne du froid, pour une sécurité alimentaire optimale.

Le procédé de déstructuration décrit ci-dessus en relation avec la figure 1, peut avantageusement être suivi d'étapes complémentaires visant à améliorer notamment la présentation à la vente des produits, tel que représenté en détail sur la figure 2.

Conformément à cette figure 2, les produits individualisés et congelés 1" sont soumis à une étape de triage 6. Ce triage consiste de manière classique en une pesée individuelle de chacun des produits 1", de manière à déterminer le poids, et ainsi le calibre, de chacun d'eux.
Ce calibre, une fois déterminé, permet la mise en oeuvre d'une étape de conditionnement 7, dans laquelle les produits 1" de même calibre sont rassemblés en lots 8.
Chaque lot 8 est ensuite conditionné dans un emballage approprié 9 pour le stockage, le transport et/ou la présentation à la vente.

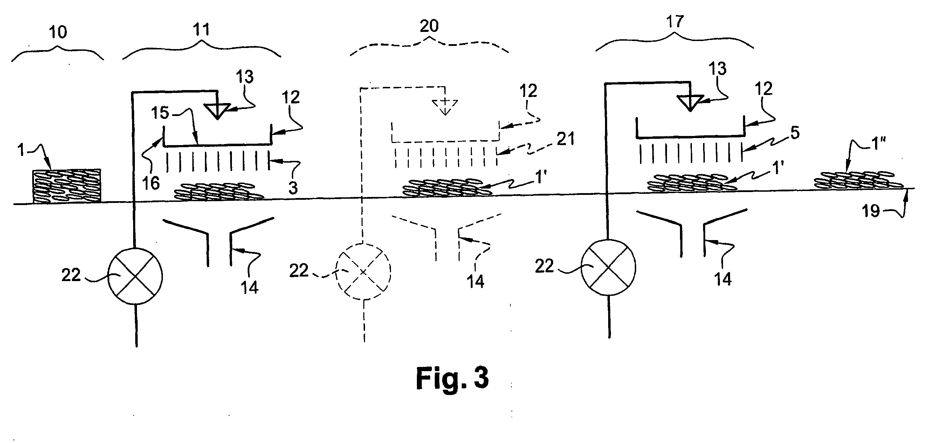

Le procédé de traitement de blocs de produits de la mer congelés, conforme à l'invention, peut être mis en oeuvre par diverses installations.
L'installation de traitement, représentée sur la figure 3, adaptée pour la mise en oeuvre du procédé objet de l'invention, comporte des postes de traitement munis de moyens d'application du liquide de traitement ici en forme de cuvettes d'arrosage.

L'installation de traitement correspondante comprend, tout d'abord, un poste de chargement 10 où les blocs de produits de la mer congelés 1 sont acheminés par tout moyen approprié.

Les blocs 1 sont déplacés vers un premier poste de traitement 11, comportant le premier liquide de traitement 3 adapté pour la mise en oeuvre de la première étape 2 du procédé de la présente invention, c'est-à-dire la déstructuration dudit bloc de produits congelés 1. Ce poste 11 comporte principalement une cuvette d'arrosage 12, associée à un moyen d'alimentation 13 en liquide de traitement 3, à savoir de préférence une saumure à une température comprise entre - 2°C et - 6°C ; après son action, le liquide 3 est avantageusement récupéré par une structure adaptée 14, en particulier en vue de son recyclage.

La cuvette d'arrosage 12 est constituée d'un élément de fond 15, rectangulaire plan, muni d'une pluralité de perforations (non visibles), et entouré d'une ceinture de parois 16.
En pratique, le moyen d'alimentation 13 assure l'apport en liquide 3 dans la cuvette d'arrosage 12, de sorte à former une couche de liquide sur l'élément de fond 15 ; le liquide 13 peut alors s'écouler de manière homogène par l'ensemble des perforations dudit élément de fond 15 sur les produits 1 à traiter pour obtenir une déstructuration efficace du bloc de produits congelés 1.

A la suite de ce premier poste de traitement 11, on trouve un second poste de traitement 17 comportant lui aussi une cuvette d'arrosage 12, similaire à celle décrite ci-dessus. Ce poste 17 comporte encore le second liquide de traitement 5, approprié pour assurer la mise en oeuvre de la seconde étape 4 du procédé objet de l'invention, à savoir le traitement des produits individualisés et congelés 1' de sorte à obtenir des produits individualisés et congelés 1" dont la température intrinsèque est adaptée pour leur conservation ; de préférence, le liquide 5 est une saumure à une température comprise entre - 18°C et - 22°C.

Il est à noter que les produits traités circulent au sein de l'installation, d'un poste à l'autre au moyen d'une structure de convoyage appropriée 19, par exemple en forme de tapis convoyeur sans fin. Tel que représenté sur la figure 3, ce tapis sans fin 19 peut recevoir directement les produits ; il peut aussi recevoir les produits indirectement, par l'intermédiaire de contenants ajourés. Ce convoyeur 19 peut également être du type aérien, constitué de chaînes ou d'un rail auquel sont suspendus des contenants ajourés qui contiennent les produits de la mer congelés.
Ce convoyeur sans fin 19, évite toute manipulation ou déplacement des produits traités entre le poste de chargement 10 et le second poste de traitement 17, au-delà duquel ils sont conditionnés.

Bien que non représenté, l'installation de traitement décrite en relation avec la figure 3 peut être complétée par tout autre poste approprié. Par exemple, il est possible d'aménager successivement, à la suite du second poste de traitement 17, un poste de pesée individuelle de chaque produit, un poste de triage des produits en lots, et un poste de conditionnement de ces lots dans des emballages appropriés.
Comme on l'a représenté en pointillés sur la figure 3, il peut également être aménagé un poste de traitement complémentaire 20, destiné à appliquer un produit antioxydant 21 de type métabisulfite par exemple, entre les postes de traitement 11 et 17. Ce produit antioxydant 21 peut être mis en oeuvre par une cuvette d'arrosage identique ou similaire aux cuvettes d'arrosage 12 précitées, mais aussi par une buse d'aspersion par exemple.

Toujours figure 3, on remarque, au niveau de chacun des postes de traitement de l'installation, la présence de pompes 22 qui assurent la circulation des liquides de traitement jusqu'aux moyens d'alimentation 13, à partir des structures de récupération 14 et/ou de sources annexes (non représentées).

Bien entendu encore, il peut tout-à-fait être envisagé de concevoir une installation dont les cuvettes d'arrosage 12 des différents postes de traitement seraient remplacés par des structures en forme de buses assurant l'aspersion sous pression du liquide de traitement.

L'installation de traitement, pour la mise en oeuvre du procédé objet de l'invention, peut également comporter des postes de traitement dont l'un au moins se présente sous la forme d'un bac d'immersion des produits, chargé en liquide de traitement ; le ou les bacs correspondants sont avantageusement équipés de dispositifs de bullage permettant de favoriser les échanges thermiques et de réduire le temps de traitement.
Dans ce cas, l'installation de traitement peut comporter un poste unique muni d'un bac d'immersion chargé en un liquide de traitement dont la température varie selon le sens de cheminement des produits, de sorte à permettre tout d'abord la déstructuration du bloc congelé, puis à assurer ensuite la descente en température des produits individualisés ainsi obtenus.
Le liquide de traitement, par exemple une saumure, peut circuler au sein du bac d'immersion de sorte à former deux zones principales de traitement à température différente ; l'une desdites zones présente une température de l'ordre de - 3°C et l'autre desdites zones est maintenue à une température de l'ordre de - 20°C, avec un gradient de température entre les deux.

Selon une variante de réalisation, l'installation pourra comporter deux postes de traitement indépendants, comportant chacun un bac d'immersion chargé en un liquide de traitement à une température appropriée, pour l'un, en vue de la déstructuration des blocs de produits, et pour l'autre, en vue de la descente en température desdits produits individualisés.

Selon ces formes particulières de réalisation, le ou les liquides de traitement, chargés dans le ou les bacs d'immersion, peuvent comporter des additifs tels que précités ; par exemple, un antioxydant de type métabisulfite peut être additionné, selon le cas, dans le bain unique ou dans le premier bain lorsque l'installation comporte deux bains indépendants.

Toujours dans les formes de réalisation à bac(s) d'immersion décrites ci-dessus, tout moyen approprié de convoyage des produits peut être mis en oeuvre pour un transport direct « en vrac » desdits produits ou pour un transport par l'intermédiaire de contenants adaptés. Les moyens de convoyage peuvent par exemple se présenter sous la forme de tapis sans fin classiques et ajourés, circulant dans le fond du bac unique ou des différents bacs des postes de traitement ; les moyens de convoyage peuvent encore consister en un système en forme de tapis sans fin s'étendant au-dessus des produits à traiter, ledit système de tapis étant muni d'organes en forme de raclettes s'étendant de manière à permettre le déplacement desdits produits au sein de l'installation.

Toujours selon ces formes particulières de réalisation, le ou les bacs d'immersion comportent avantageusement des moyens pour produire un bullage et provoquer une agitation de l'eau autour des produits, favorisant ainsi le contact entre lesdits produits et le liquide de traitement en vue de la déstructuration des blocs congelés et la descente en température des produits une fois individualisés. Le bullage correspondant peut être obtenu par un système de rampe(s) d'insufflation d'air sous pression.
Cette insufflation d'air permet le maintien en suspension des produits au sein du ou des bacs de traitement, ce qui facilite leur cheminement, en particulier dans le cas du système de tapis sans fin avec raclettes.

On comprend bien encore qu'il pourrait être envisagé de concevoir une installation dont chacun des postes de traitement serait équipé de moyens d'application des liquides de traitement différents.
Par exemple, il peut être envisagé une installation où l'étape de déstructuration des blocs serait réalisée au moyen d'un poste muni d'une cuvette d'arrosage, l'étape de descente en température de conservation étant quant à elle mise en oeuvre par un poste de traitement comportant un bac d'immersion approprié.

## Revendications

1. Procédé de déstructuration d'un bloc congelé de produits de la mer (1), en particulier de crustacés genre crevettes ou langoustines, **caractérisé en ce qu'**il consiste :
- à soumettre ledit bloc congelé de produits (1) à un premier liquide de traitement (3) adapté pour individualiser lesdits produits, tout en les maintenant dans un état congelé, puis
- à soumettre lesdits produits congelés individualisés (1') à un second liquide de traitement (5) adapté pour abaisser leur température afin d'optimiser leur conservation.

2. Procédé selon la revendication 1, **caractérisé en ce qu'**il consiste :
- à traiter le bloc de produits congelés (1) avec un premier liquide de traitement (3) en forme de saumure à température T1 négative, ceci pendant un temps t1 adapté pour individualiser lesdits produits, puis
- à traiter lesdits produits individualisés congelés (1') avec un second liquide de traitement (5) en forme de saumure à une température T2 négative, inférieure à T1, et ceci pendant un temps t2 adapté pour que lesdits produits individualisés atteignent leur température optimale de conservation.

3. Procédé selon la revendication 2, **caractérisé en ce qu'**il consiste :
- à traiter le bloc de produits congelés (1) avec une première saumure (3) à une température T1 comprise entre - 2°C et - 6°C, pendant un temps t1 compris entre 2 et 5 min, puis
- à traiter les produits individualisés (1') obtenus, avec une seconde saumure (5) à une température T2 comprise entre - 18°C et - 22°C, ceci pendant un temps t2 compris entre 2 et 4 min.

4. Procédé selon l'une quelconque des revendications 1 à 3, **caractérisé en ce que** le traitement du bloc de produits congelés (1) et/ou le traitement des produits congelés individualisés (1'), sont réalisés par arrosage d'un liquide de traitement (3, 5).

5. Procédé selon l'une quelconque des revendications 1 à 3, **caractérisé en ce que** le traitement du bloc de produits congelés (1) et/ou le traitement des produits congelés individualisés (1'), sont réalisés par aspersion d'un liquide de traitement (3, 5).

6. Procédé selon l'une quelconque des revendications 1 à 3, **caractérisé en ce que** le traitement du bloc de produits congelés (1) et/ou le traitement des produits congelés individualisés (1'), sont réalisés par immersion dans au moins un bain de liquide de traitement approprié (3, 5), associé à un bullage.

7. Procédé selon l'une quelconque des revendications 1 à 6, **caractérisé en ce qu'**il consiste, après les opérations de déstructuration du bloc congelé (1) et de mise à température de conservation optimale des produits individualisés congelés (1') :
- à peser individuellement chaque produit (1 "),
- à regrouper lesdits produits (1") en lots (8) en fonction de leur poids, et
- à conditionner lesdits lots de produits (8) dans des emballages appropriés (9) en vue de leur stockage, de leur transport et/ou de leur présentation à la vente.

8. Procédé selon l'une quelconque des revendications 1 à 7, **caractérisé en ce qu'**il comprend la mise en oeuvre d'une installation comprenant :
- un poste de chargement (10) des blocs de produits congelés (1) ;
- un poste de traitement (11) comportant un premier liquide de traitement (3) approprié pour individualiser lesdits produits tout en les maintenant dans un état congelé, le traitement desdits produits (1) par ledit liquide (3) étant réalisé par des moyens d'application adaptés ;
- un poste de traitement (17) comportant un autre liquide de traitement (5) approprié pour amener lesdits produits congelés individualisés (1') à une température optimale en vue de leur conservation par le froid, le traitement desdits produits (1') par ledit liquide (5) étant réalisé par des moyens d'application adaptés ; et
- des moyens de transfert automatique (19) des produits d'un poste à l'autre.

9. Procédé selon la revendication 8, **caractérisé en ce qu'**il comprend :
- un poste de chargement (10) des blocs de produits congelés (1) ;
- un poste de traitement (11) comportant un premier liquide de traitement (3) approprié pour individualiser lesdits produits tout en les maintenant dans un état congelé, le traitement desdits produits (1) par ledit liquide (3) étant réalisé par des moyens d'application adaptés ;
- un poste de traitement (17) comportant un autre liquide de traitement (5) approprié pour amener lesdits produits congelés individualisés (1') à une température optimale en vue de leur conservation par le froid, le traitement desdits produits (1') par ledit liquide (5) étant réalisé par des moyens d'application adaptés ;
- un poste de pesée individuelle de chaque produit ;
- un poste de triage des produits en lots en fonction de leur poids, avant le conditionnement de ces lots dans des emballages appropriés en vue de leur stockage, de leur transport et/ou de leur présentation à la vente ; et
- des moyens de transfert automatique (19) des produits d'un poste à l'autre.

10. Procédé selon l'une quelconque des revendications 8 ou 9, **caractérisé en ce que** l'un au moins des postes de traitement comporte au moins une cuvette d'arrosage (12) comprenant un élément de fond plan (15) muni d'une pluralité de perforations, laquelle cuvette d'arrosage (12) est associée à un moyen d'alimentation (13) en liquide de traitement (3, 5).

11. Procédé selon l'une quelconque des revendications 8 ou 9, **caractérisé en ce que** l'un au moins des postes de traitement comporte au moins une buse d'aspersion de liquide de traitement (3, 5).

12. Procédé selon l'une quelconque des revendications 8 ou 9, **caractérisé en ce que** l'un au moins des postes de traitement comporte au moins un bac d'immersion des produits, chargé en liquide de traitement (3, 5), lequel bac est équipé d'un dispositif de bullage.

## Patentansprüche

1. Verfahren zum Aufbrechen der Struktur eines tiefgefrorenen Blocks von Meeresprodukten (1), insbesondere von Krustentieren des Typs Krevetten oder Krabben, **dadurch gekennzeichnet, dass** es darin besteht:
- den Block tiefgefrorener Produkte (1) einer Behandlung mit einer ersten Behandlungsflüssigkeit (3) zur Vereinzelung dieser Produkte zu unterziehen, wobei diese dabei im tiefgefrorenen Zustand belassen werden, dann
- die vereinzelten tiefgefrorenen Produkte (1') einer Behandlung mit einer zweiten Behandlungs-flüssigkeit (5) zur Erniedrigung ihrer Temperatur zu unterziehen, so dass ihre Konservierung optimiert wird.

2. Verfahren nach Anspruch 1, **dadurch gekennzeichnet, dass** es darin besteht:
- den Block tiefgefrorener Produkte (1) während eines für die Vereinzelung der Produkte geeigneten Zeitraums t1 mit einer ersten, in Form von Salzlake vorliegenden Behandlungsflüssigkeit (3) bei einer negativen Temperatur T1 zu behandeln, dann
- die vereinzelten tiefgefrorenen Produkte (1') während eines Zeitraums t2, während dessen die vereinzelten Produkte auf ihre optimale Konservierungstemperatur gebracht werden können, mit einer zweiten, in Form von Salzlake vorliegenden Behandlungsflüssigkeit (5) bei einer negativen Temperatur T2, die geringer als T1 ist, zu behandeln.

3. Verfahren nach Anspruch 2, **dadurch gekennzeichnet, dass** es darin besteht:
- den Block tiefgefrorener Produkte (1) während eines Zeitraums t1 von 2 bis 5 Min bei einer Temperatur T1 im Bereich von -2°C und -6°C mit einer ersten Salzlake (3) zu behandeln, dann
- die erhaltenen vereinzelten Produkte (1') während eines Zeitraums t2 von 2 bis 4 Min bei einer Temperatur T2 im Bereich von -18 °C bis -22 °C mit einer zweiten Salzlake (5) zu behandeln.

4. Verfahren nach einem der Ansprüche 1 bis 3, **dadurch gekennzeichnet, dass** die Behandlung des Blocks tiefgefrorener Produkte (1) und/oder die Behandlung der vereinzelten tiefgefrorenen Produkte (1') durch Berieselung derselben mit einer Behandlungsflüssigkeit (3, 5) erfolgen.

5. Verfahren nach einem der Ansprüche 1 bis 3, **dadurch gekennzeichnet, dass** die Behandlung des Blocks tiefgefrorener Produkte (1) und/oder die Behandlung der vereinzelten tiefgefrorenen Produkte (1') durch Besprenkelung derselben mit einer Behandlungsflüssigkeit (3, 5) erfolgen.

6. Verfahren nach einem der Ansprüche 1 bis 3, **dadurch gekennzeichnet, dass** die Behandlung des Blocks tiefgefrorener Produkte (1) und/oder die Behandlung der vereinzelten tiefgefrorenen Produkte (1') durch Eintauchen derselben in mindestens ein Bad einer geeigneten Behandlungsflüssigkeit (3, 5) erfolgt, wobei diese Behandlung unter Luftzufuhr durchgeführt wird.

7. Verfahren nach einem der Ansprüche 1 bis 6, **dadurch gekennzeichnet, dass** es darin besteht, nach dem Aufbrechen der Struktur des tiefgefrorenen Blocks (1) und nach dem Vorgang, der darin bestand, die vereinzelten tiefgefrorenen Produkte (1') auf die optimale Konservierungstemperatur zu bringen,
- jedes Produkt (1 ") einzeln zu wiegen,
- die Produkte (1") nach Gewicht in Partien (8) zusammenzufassen, und
- die Warenpartien (8) im Hinblick auf ihre Lagerung, ihren Transport und/oder ihrer Darbietung beim Verkauf in geeignete Verpackungen (9) zu verpacken.

8. Verfahren nach einem der Ansprüche 1 bis 7, **dadurch gekennzeichnet, dass** es die Inbetriebnahme einer Anlage umfasst, welche folgende Stationen aufweist:
- eine Beschickungsstation (10) zur Beschickung der tiefgefrorenen Produkte (1);
- eine Behandlungsstation (11) umfassend eine erste Behandlungsflüssigkeit (3), die dafür geeignet ist, die Produkte zu vereinzeln und sie dabei in einem tiefgefrorenen Zustand zu belassen, wobei die Behandlung der Produkte (1) mit der Flüssigkeit (3) mit geeigneten Anwendungsmitteln durchgeführt wird;
- eine Behandlungsstation (17) umfassend eine weitere Behandlungsflüssigkeit (5), die dafür geeignet ist, die vereinzelten tiefgefrorenen Produkte (1') auf eine optimale Temperatur zu bringen, damit diese durch Kälte konserviert werden können, wobei die Behandlung dieser Produkte (1') mit der Flüssigkeit (5) mit geeigneten Anwendungsmitteln durchgeführt wird; und
- Mittel zum automatischen Transport (19) der Produkte von einer Station zur anderen.

9. Verfahren nach Anspruch 8, **dadurch gekennzeichnet, dass** es Folgendes umfasst:
- eine Beschickungsstation (10) zur Beschickung der tiefgefrorenen Produkte (1);
- eine Behandlungsstation (11) umfassend eine erste Behandlungsflüssigkeit (3), die dafür geeignet ist, die Produkte zu vereinzeln und sie dabei in einem tiefgefrorenen Zustand zu belassen, wobei die Behandlung der Produkte (1) mit der Flüssigkeit (3) mit geeigneten Anwendungsmitteln durchgeführt wird;
- eine Behandlungsstation (17) umfassend eine weitere Behandlungsflüssigkeit (5), die dafür geeignet ist, die vereinzelten tiefgefrorenen Produkte (1') auf eine optimale Temperatur zu bringen, damit diese durch Kälte konserviert werden können, wobei die Behandlung dieser Produkte (1') durch die Flüssigkeit (5) mit geeigneten Anwendungsmitteln durchgeführt wird;
- eine Wiegestation zum Wiegen jedes einzelnen Produktes;
- eine Sortierstation zur Sortierung der Warenpartien nach Gewicht, bevor diese Warenpartien zu deren Lagerung, Transport und/oder Darbietung beim Verkauf in geeignete Verpackungen verpackt werden; und
- Mittel zum automatischen Transport (19) der Produkte von einer Station zur anderen.

10. Verfahren nach einem der Ansprüche 8 oder 9, **dadurch gekennzeichnet, dass** mindestens eine der Behandlungsstationen eine Berieselungswanne (12) umfasst, welche ein mit mehreren Bohrungen versehenes, ebenes Bodenelement (15) aufweist, wobei die Berieselungswanne (12) einem Zufuhrmittel (13) zur Zuführung der Behandlungsflüssigkeit (3, 5) zugeordnet ist.

11. Verfahren nach einem der Ansprüche 8 oder 9, **dadurch gekennzeichnet, dass** mindestens eine Behandlungsstation mindestens eine Sprenkeldüse zur Besprenkelung der Produkte mit einer Behandlungsflüssigkeit (3, 5) aufweist.

12. Verfahren nach einem der Ansprüche 8 oder 9, **dadurch gekennzeichnet, dass** mindestens eine Behandlungsstation mindestens einen Tauchbehälter zum Eintauchen der Produkte aufweist, welcher mit Behandlungsflüssigkeit (3, 5) gefüllt ist und mit einer Luftzufuhranlage ausgestattet ist.

## Claims

1. A method for de-structuring a frozen block of seafood products (1), in particular shellfish such as prawns or langoustines, **characterised in that** it comprises:
- subjecting said frozen block of products (1) to a first treatment liquid (3) suited for individualising said products, while preserving them in frozen condition, then
- subjecting said individualised frozen products (1') to a second treatment liquid (5) suited for lowering their temperature in order to optimise the conservation thereof.

2. A method according to claim 1, **characterised in that** it comprises:
- treating the block of frozen products (1) with a first treatment liquid (3) in the form of a brine at negative temperature T1, i.e. for a period t1 suited for individualising said products, then
- treating said frozen individualised products (1') with a second treatment liquid (5) in the form of a brine at a negative temperature T2, smaller than T1, i.e. for a period t2 adequate for said individualised products to reach their optimal conservation temperature.

3. A method according to claim 2, **characterised in that** it comprises:
- treating the block of frozen products (1) with a first brine (3) at a temperature T1 ranging between - 2°C and - 6°C, for a period t1 ranging between 2 and 5 min, then
- treating the individualised products (1') obtained, with a second brine (5) at a temperature T2 ranging between - 18°C and - 22°C, i.e. for a period t2 ranging between 2 and 4 min.

4. A method according to any of the claims 1 to 3, **characterised in that** the treatment of the block of frozen products (1) and/or the treatment of the individualised frozen products (1'), are performed by spraying a treatment liquid (3, 5).

5. A method according to any of the claims 1 to 3, **characterised in that** the treatment of the block of frozen products (1) and/or the treatment of the individualised frozen products (1'), are performed by sprinkling a treatment liquid (3, 5).

6. A method according to any of the claims 1 to 3, **characterised in that** the treatment of the block of frozen products (1) and/or the treatment of the individualised frozen products (1'), are performed by immersion in at least one appropriate liquid treatment bath (3,5), associated with a bubbling treatment.

7. A method according to any of the claims 1 to 6, **characterised in that** it comprises, after de-structuring the frozen block (1) and setting at the optimum conservation temperature of the individualised frozen products (1'):
- weighing each product (1 ") individually,
- gathering said products (1") in batches (8) according to their weights, and
- placing said batches of products (8) inside appropriate packagings (9) for storing, transporting and/or displaying them for selling purposes.

8. A method according to any of the claims 1 to 7, **characterised in that** it comprises the implementation of an installation including:
- a loading station (10) of the blocks of frozen products (1);
- a treatment station (11) containing a first treatment liquid (3) appropriate for individualising said products while preserving them in frozen condition, the treatment of said products (1) by said liquid (3) being performed by suitable application means;
- a treatment station (17) containing another treatment liquid (5) appropriate for bringing said individualised frozen products (1') to an optimum temperature for cold preservation thereof, the treatment of said products (1') by said liquid (5) being performed by suitable application means ; and
- automatic transfer means (19) of the products from one station to the other.

9. A method according to claim 8, **characterised in that** it comprises:
- a loading station (10) of the blocks of frozen products (1) ;
- a treatment station (11) containing a first treatment liquid (3) appropriate for individualising said products while preserving them in frozen condition, the treatment of said products (1) by said liquid (3) being performed by suitable application means ;
- a treatment station (17) containing another treatment liquid (5) appropriate for bringing said individualised frozen products (1') to an optimum temperature for cold preservation thereof, the treatment of said products (1') by said liquid (5) being performed by suitable application means ;
- an individual weighing station of each product;
- a sorting station of the products in batches relative to their weights, before placing said batches inside appropriate packagings for storing, transporting and/or displaying them for selling purposes; et
- automatic transfer means (19) of the products from one station to the other.

10. A method according to any of the claims 8 or 9, **characterised in that** at least one of the treatment stations includes at least one spraying basin (12) comprising a flat-bottomed element (15) fitted with a plurality of perforations, which spraying basin (12) is associated with a supply means (13) with treatment liquid (3, 5).

11. A method according to any of the claims 8 or 9, **characterised in that** at least one of the treatment stations includes at least one treatment liquid sprinkling nozzle (3, 5).

12. A method according to any of the claims 8 or 9, **characterised in that** at least one of the treatment stations includes at least one immersion tub of the products, filled with treatment liquid (3, 5), which tub is fitted with a bubbling device.
